# EUROPÄISCHE PATENTSCHRIFT

(11) **EP 2 903 855 B1**
(45) Veröffentlichungstag und Bekanntmachung des Hinweises auf die Patenterteilung: **17.08.2016**
(21) Anmeldenummer: 13770479.7
(22) Anmeldetag: 27.09.2013
(51) Int. Cl.: B60N 2/235

(54) **BESCHLAG FÜR EINEN FAHRZEUGSITZ UND FAHRZEUGSITZ**
FITTING FOR A VEHICLE SEAT AND VEHICLE SEAT
FERRURE POUR SIÈGE DE VÉHICULE ET SIÈGE DE VÉHICULE

(30) Priorität: 04.10.2012 DE 102012019698; 22.11.2012 DE 102012023057
(43) Veröffentlichungstag der Anmeldung: 12.08.2015
(73) Patentinhaber: Johnson Controls Components GmbH & Co. KG, 67657 Kaiserslautern (DE)
(72) Erfinder: PETERS, Christoph, 42929 Wermelskirchen (DE); LEHMANN, Ulrich, 53347 Alfter (DE)
(74) Vertreter: Liedhegener, Ralf
(86) Internationale Anmeldenummer: PCT/EP2013/070151
(87) Internationale Veröffentlichungsnummer: WO 2014/053400

(56) Entgegenhaltungen:
- WO-A1-2007/039001
- DE-B3-102010 053 525
- JP-A- 2001 204 572

## Beschreibung

Die Erfindung betrifft einen Beschlag für einen Fahrzeugsitz mit den Merkmalen des Oberbegriffs des Anspruchs 1 sowie einen Fahrzeugsitz.

### Stand der Technik

Gattungsgemäße Beschläge weisen wenigstens einen Riegel und einen drehbaren Exzenter auf. Der Exzenter hält federvorbelastet den wenigstens einen Riegel im Eingriff mit einer Zahnkranzverzahnung. Die Exzenterkontur ist selbsthemmend ausgeführt, d.h. eine Kraftübertragung von dem Zahnsegment auf den Exzenter führt unter statischen Lastbedingungen oder Impulslasten nicht zu einem Verdrehen des Exzenters und dadurch nicht zu einem Öffnen des Beschlages. Ungünstige Belastungsbedingungen, insbesondere zyklische oder Schwingungsbeanspruchungen, können jedoch unter ungünstigen Umständen zu einer ungewollten Drehung des Exzenters und dadurch zu einem ungewollten Öffnen des Beschlages führen.

Während der Montage eines gattungsgemäßen Beschlages wird ein Exzenterwinkel, der die Winkelstellung des Exzenters relativ zu einem drehfesten Bauteil des Beschlages definiert, zur Kontrolle einer vollständigen Verriegelung herangezogen. Bekannte Exzenter haben den Nachteil, dass schwer zu erfassen ist, ob der gemessene Exzenterwinkel noch innerhalb eines durch zulässige Bauteiltoleranzen definierten zulässigen Exzenterwinkelbereiches liegt. Mess- und/oder Ableseungenauigkeiten des Exzenterwinkels können zu einer falschen Beurteilung des Beschlages führen.

Aus der DE 10 2010 053 525 B3 ist ein gattungsgemäßer Beschlag bekannt, bei dem in einem ersten Kontaktpunkt zwischen einem ersten Exzenternocken und einem ersten Riegelnocken ein erster Keilwinkel definiert ist, welcher positiv ist und in einem zweiten Kontaktpunkt, der nur unter Last zwischen dem zweiten Exzenternocken und dem zweiten Riegelnocken entsteht, ein zweiter Keilwinkel definiert ist, welcher negativ ist. Der positive Keilwinkel am ersten Nockenpaar dient dem Sperren des Riegels und dem Toleranzausgleich. Eine vom Riegel über das erste Nockenpaar auf den Exzenter übertragene Normalkraft mit öffnender Komponente wird durch Reibkräfte selbsthemmend kompensiert. Der negative Keilwinkel am zweiten Nockenpaar dient dem Sperren der Drehung des Exzenters unter Belastung, denn die Normalkraft weist hier eine schließende Komponente auf. In der Praxis hat sich gezeigt, dass dieses System aus erstem und zweitem Keilwinkel sehr toleranzempfindlich ist.

Aus der DE 44 19 411 A1 ist ein Beschlag mit einem Riegel bekannt, der in zwei axial und radial zueinander versetzten Teilbereichen des Riegels jeweils eine Anlagefläche aufweist. Zum Verriegeln des Riegels und damit des Beschlags ist ein Exzenter vorgesehen, der schwimmend mit einer Antriebsbuchse gekoppelt ist. Der Exzenter umfasst einen Nocken mit einer Spannfläche, die von einem Ende zu dem anderen Ende des Nockens hin stetig ansteigt und mit einer der beiden Anlageflächen verriegelnd zusammenwirkt. Die Antriebsbuchse umfasst einen weiteren Nocken mit einer konzentrischen Fangfläche, die mit der anderen der beiden Anlageflächen zusammenwirkt. Die beiden Nocken sind in Umfangsrichtung nur wenig zueinander versetzt und werden bei einer Verriegelung des Beschlags zeitgleich unter die zugeordneten Anlageflächen gedreht. Dies führt dazu, dass der Nocken mit der Spannfläche bereits mit nach einem kleinen Drehwinkel des Exzenters an dem Riegel anliegt. Dieser kleine Drehwinkel macht es aufwendig, den Verriegelungszustand des Beschlags sicher anhand des Exzenterwinkels zu beurteilen.

Die EP 1 591 303 A2 offenbart einen weiteren Beschlag mit einem Exzenter, der zur Abstützung eines Riegels zwei Exzenternocken aufweist. Es ist nicht beschrieben, wie die Exzenternocken zu gestalten sind, damit der Verriegelungszustand des Beschlages sicher anhand des Exzenterwinkels beurteilbar ist.

### Aufgabe

Der Erfindung liegt die Aufgabe zu Grunde, einen Beschlag der eingangs genannten Art zu verbessern, insbesondere toleranzunempfindlicher zu gestalten. Es soll eine sichere Verriegelung auch unter ungünstigen Belastungen sichergestellt werden und eine einfachere Möglichkeit geschaffen werden, den Verriegelungszustand des Beschlages sicher anhand des Exzenterwinkels zu beurteilen. Der Erfindung liegt zudem die Aufgabe zugrunde, einen Fahrzeugsitz durch Verwendung eines Beschlages mit optimierter Verriegelungssicherheit zu verbessern.

### Lösung

Diese Aufgabe wird erfindungsgemäß durch einen Beschlag mit den im Anspruch 1 genannten Merkmalen sowie einen Fahrzeugsitz mit den Merkmalen des Anspruches 10 gelöst.

Dadurch, dass der erste Exzenternocken einen Nockenabschnitt aufweist, der in Umfangsrichtung konzentrisch um die Achse verläuft und dass dieser konzentrisch um die Achse verlaufende Nockenabschnitt entgegen der Schließrichtung vor einem weiteren Nockenabschnitt des ersten Exzenternockens angeordnet ist, und der weitere Nockenabschnitt entgegen der Schließrichtung eine gegenüber der konzentrischen Umfangskontur radial nach außen verlaufende Nockenkontur zum Spannen des Riegels in den Zahnkranz aufweist, wird erreicht, dass der Exzenter eines Beschlages mit unzulässig hohen Toleranzen im verriegelten Zustand im Vergleich zu einem Beschlag mit Nennmaß-Bauteilen eine deutliche und zuverlässig messbaren Drehwinkelabweichung in Richtung eines geöffneten Beschlages aufweist.

Die verwendete Richtungsangabe "entgegen der Schließrichtung" ist gleichbedeutend mit einer Blickrichtung entgegen der Schließrichtung. Bei einer Drehung des Exzenters in Schließrichtung erreichen die entgegen der Schließrichtung vorderen Nockenabschnitte den zugeordneten Riegelnocken demnach zuerst.

Der Exzenter des Beschlags ist, unabhängig vom Ausführungsbeispiel, im entriegelten Zustand soweit entgegen der Schließrichtung verdreht, und der Riegel soweit radial nach innen bewegt, dass der erste Riegelnocken des radial nach innen gezogenen Riegels in einem Zwischenraum zwischen in radialer Richtung verlaufenden Seitenkonturen der ersten und zweiten Exzenternocken liegen. Wenn der Exzenter beim Verriegeln aufgrund eines radial zu weit innen liegenden ersten Riegelnockens nicht mehr seine vorgesehenen Sperrposition erreichen kann, weil der erste Exzenternocken mit dem konzentrischen Nockenabschnitt in radialer Richtung nicht unter den ersten Riegelnocken passt, bleibt der Exzenter mindestens um ein zuverlässig messbares Exzenterwinkelmaß, das der Länge des konzentrischen Nockenabschnitts entspricht, geöffnet stehen. Dieser Winkelschritt ist leichter zu erkennen, als wenn der Exzenterdrehwinkel sich kontinuierlich verändert und lediglich eine Grenze für den zulässigen Winkelwert gesetzt wird. Dies vereinfacht die Beurteilung von montierten Beschlägen auf deren sichere Funktion hin.

Im Vergleich zum Stande der Technik kann dadurch, dass der erste Exzenternocken einen Nockenabschnitt aufweist, der in Umfangsrichtung konzentrisch um die Achse A verläuft, auf einen negativen Keilwinkel an einem zweiten Nockenpaar verzichtet werden. Das System wird dadurch toleranzunempfindlicher.

Das Einbringen eines exakt konzentrischen Nockenabschnitts (Nullgradkontur) am ersten Exzenternocken ist die bevorzugte Lösung. Der Begriff konzentrisch umfasst hierbei auch quasikonzentrische Nockenabschnitte, die einen sehr geringen Winkel zwischen einer Tangente an den quasikonzentrischen Nockenabschnitt und einem um die Achse des Exzenters verlaufenden Kreisbogen besitzen, der idealerweise ungefähr halb so groß oder kleiner als der Winkel in einem vierten Nockenabschnitt der Sperrkontur des ersten Exzenternockens ist. Durch den kleineren Winkel entstehen geringere Kraftkomponenten in öffnender Exzenterdrehrichtung und größere Reibkraftkomponenten, die den Exzenter in Sperrposition halten.

Sollte der Exzenter unter ungünstigen Bedingungen öffnende Kräfte erfahren, wird eine mögliche ungewollte Exzenterbewegung nach einem Exzenterdrehwinkel von vorzugsweise ca. 4° (alternativ bis zu ca. 8°) bei Kontakt des ersten Riegelnockens an der konzentrischen Kontaktstelle des ersten Exzenternockens stoppen. So wird eine ausreichende Verriegelung des Beschlages sichergestellt.

Die konzentrische Kontaktfläche führt zu einem leichten Bedienkraftanstieg während der Entriegelung des Beschlages und gibt somit ein gut spürbares Signal, wann der Entriegelungspunkt erreicht und der Beschlag freigegeben ist. Nach Verlassen der konzentrischen Kontaktfläche erfolgt wieder eine Betätigung mit geringerer Bedienkraft. Dies führt vorteilhaft zu einem deutlicheren Messergebnis durch den speziellen Kraft-/Drehwinkelverlauf während einer Funktionsprüfung des Beschlages.

Vorzugsweise weist der erste Exzenternocken einen ersten Nockenabschnitt auf, der durch eine Verrundung einer im Wesentlichen in radialer Richtung verlaufenden ersten Flanke des Exzenternockens mit einer im Wesentlichen in Umfangsrichtung verlaufenden Kontur des Exzenternockens eine Steuerkontur definiert, die das Einsteuern des Riegels in den Zahnkranz steuert, während der Exzenter in Schließrichtung dreht. Vorteilhaft bildet ein zweiter Nockenabschnitt, der unmittelbar an den ersten Nockenabschnitt anschließt und in Umfangsrichtung konzentrisch um die Achse A verläuft, den konzentrischen Nockenabschnitt.

Zur Bereitstellung einer Freischwenkfunktion kann der Verriegelungszustand des Beschlages mit einem Verriegelungszustand eines weiteren Beschlages gekoppelt sein, so dass der weitere Beschlag über ein Kopplungsmittel, insbesondere einen Bowdenzug, bei geöffnetem Beschlag durch diesen ebenfalls geöffnet gehalten wird. Ein Zusatznockenabschnitt zwischen dem ersten Nockenabschnitt und dem zweiten Nockenabschnitt des ersten Exzenternockens des Beschlages gleicht hierbei eventuell vorhandenes Spiel und Toleranzen im Kopplungsmittel aus.

Der vierte Nockenabschnitt ist durch eine - entgegen der Schließrichtung - gegenüber der Umfangrichtung leicht radial nach außen verlaufende Nockenkontur gekennzeichnet, die in einem Keilwinkel verläuft, der vorzugsweise 4° bis 6° beträgt. Der Keilwinkel bedingt, dass die in Schließrichtung nacheilenden Bereiche des vierten Nockenabschnitts radial weiter nach außen ragen als die voreilenden Bereiche, so dass der vom ersten Exzenternocken beaufschlagte Riegel gesperrt werden kann und ein Toleranzausgleich möglich ist. Der in Schließrichtung voreilende Bereich des vierten Nockenabschnitts erreicht während des Verriegelns zuerst den zugeordneten ersten Exzenternocken, so dass nachfolgend die radial nach außen verlaufende Nockenkontur den Riegel nach außen drückt.

Ein Verhaken der Kontur des ersten Riegelnockens an der Kontur des ersten Exzenternockens während des Drehens des Exzenters wird zuverlässig vermieden, indem der Beschlag zwischen dem zweiten Nockenabschnitt und dem vierten Nockenabschnitt einen dritter Nockenabschnitt aufweist, der den zweiten Nockenabschnitt und den vierten Nockenabschnitt stetig, insbesondere kontinuierlich ohne Kanten, miteinander verbindet.

Die Festigkeit des erfindungsgemäßen Beschlages lässt sich steigern, indem im verriegelten, unbelasteten Zustand des Beschlages der erste Exzenternocken in einem ersten Kontaktpunkt mit dem ersten Riegelnocken in Kontakt steht und zwischen dem zweiten Exzenternocken und dem zweiten Riegelnocken ein Spalt von insbesondere 0,05 bis 0,5 mm besteht. Im verriegelten, belasteten Zustand des Beschlages, insbesondere wenn der Fahrzeugsitz aufgrund eines Crashs hohen Kräften ausgesetzt ist, wird der Riegel zwischen den Führungssegmenten verkippt, so dass dadurch zusätzlich zu dem Kontakt zwischen dem ersten Exzenternocken und dem ersten Riegelnocken in dem ersten Kontaktpunkt, der Riegel verkippt und der zweite Exzenternocken in einem zweiten Kontaktpunkt mit dem zweiten Riegelnocken in Kontakt steht.

Der konzentrische Nockenabschnitt des ersten Exzenternockens wird vorteilhaft mit einer gegensinnigen Riegelkippung von insgesamt vier Riegeln kombiniert. Für jeweils zwei radial gegenüberliegende Riegel sind an dem Exzenter in Schließrichtung die ersten Exzenternocken gegenüber den zweiten Exzenternocken voreilend angeordnet; für die beiden anderen Riegel sind an dem Exzenter in Schließrichtung die ersten Exzenternocken gegenüber den zweiten Exzenternocken nacheilend angeordnet. Unter Last verkippt jeder Riegel bei verriegeltem Beschlag gegensinnig zu den jeweils benachbarten Riegeln. Somit ist für beide Lastrichtungen ein festigkeitssteigerndes Verkippen von zwei Riegeln gewährleistet.

Der konzentrische Nockenabschnitt wird vorteilhaft nur an den ersten Exzenternocken ausgebildet; die zweiten Exzenternocken haben im Ruhezustand keinen Kontakt mit den zweiten Riegelnocken und werden ohne einen konzentrischen Nockenabschnitt ausgebildet. Grundsätzlich ist es aber auch möglich, dass alle Sperrnocken eines Exzenters mit einem konzentrischen Nockenabschnitt versehen sind.

Es ist ausreichend, wenn bei einem Beschlag, der mindestens zwei Riegel und genau einen Exzenter mit mindestens zwei ersten Exzenternocken aufweist, nur genau ein erster Exzenternocken der mindestens zwei ersten Exzenternocken einen konzentrisch um die Achse verlaufende Nockenabschnitt aufweist und die übrigen ersten Exzenternocken, die einen keinen konzentrisch um die Achse verlaufende Nockenabschnitt aufweisen, in Umfangsrichtung entsprechend kürzer ausgebildet sind.

Die Festigkeit eines Fahrzeugsitzes mit einem Sitzteil und einer Lehne, die mittels wenigstens eines Beschlages miteinander verbunden sind, kann durch Verwendung eines erfindungsgemäßen Beschlages optimiert werden. Aufgrund des zuverlässig prüfbaren Verriegelungszustandes des Beschlages wird die Sicherheit des Fahrzeugsitzes weiter erhöht.

### Figuren und Ausführungsformen der Erfindung

Im Folgenden ist die Erfindung anhand von zwei in den Zeichnungen dargestellten vorteilhaften Ausführungsbeispielen näher erläutert. Die Erfindung ist jedoch nicht auf diese Ausführungsbeispiele beschränkt. Es zeigen:

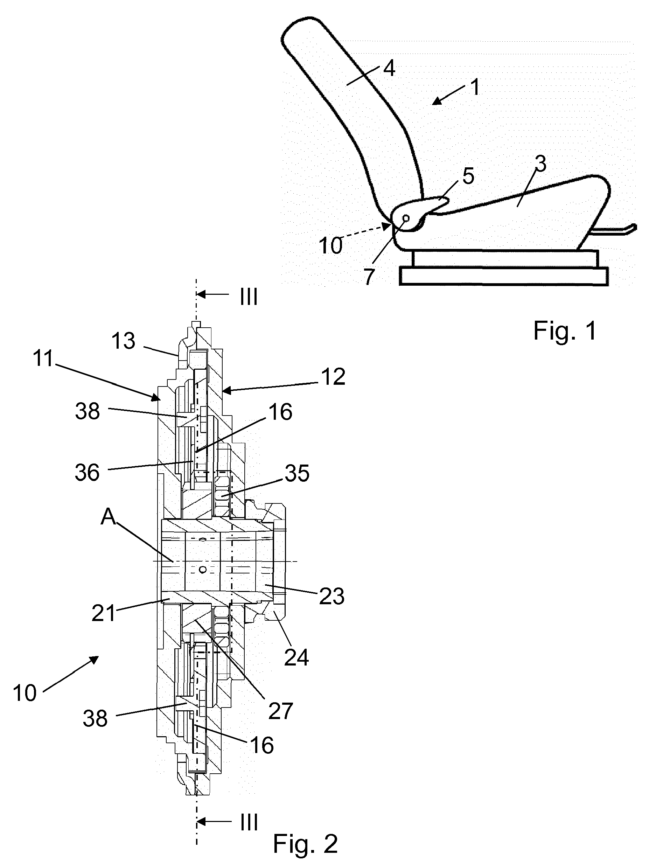

- Fig. 1:: eine schematische Darstellung eines Fahrzeugsitzes mit einem Beschlag gemäß einem ersten Ausführungsbeispiel,
- Fig. 2:: einen axialen Schnitt durch das erste Ausführungsbeispiel,

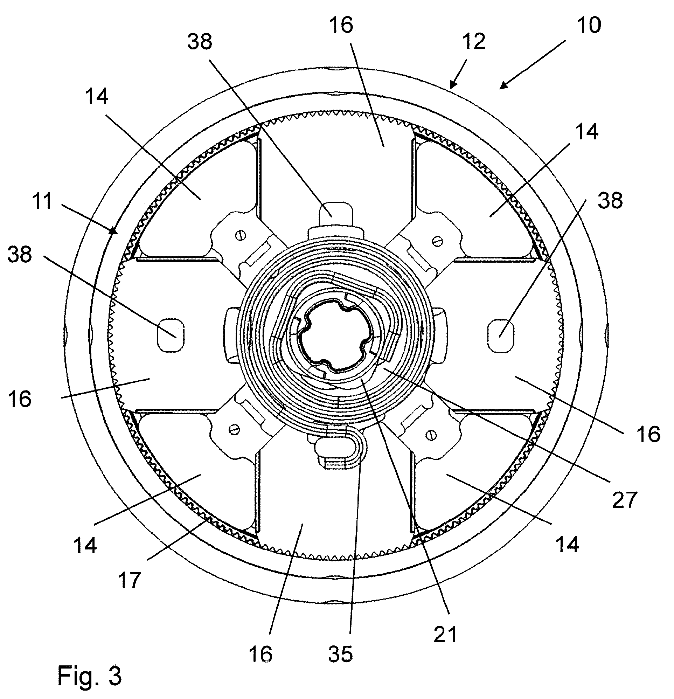

- Fig. 3:: einen radialen Schnitt durch das erste Ausführungsbeispiel entlang der Linie III-III in Fig. 2,
- Fig. 4:: eine perspektivische Ansicht des Exzenters des ersten Ausführungsbeispiels,
- Fig. 5:: eine Vorderansicht des Exzenters des ersten Ausführungsbeispiels,

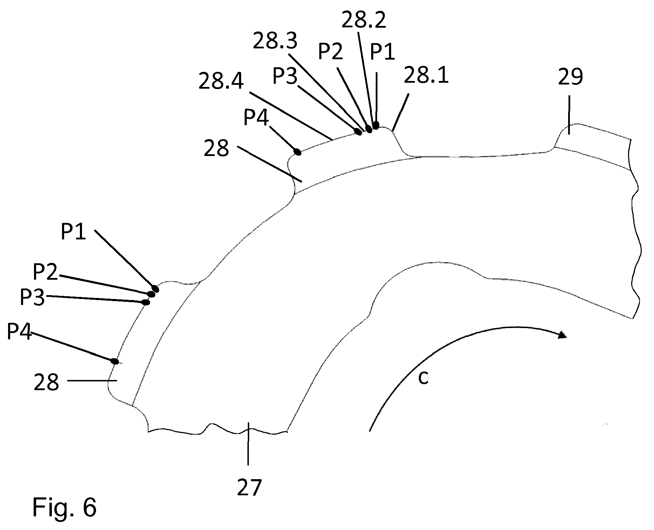

- Fig. 6:: die Einzelheit VI aus Fig. 5,
- Fig. 7:: eine Fig. 3 entsprechende Ansicht eines verriegelten Beschlages mit Nennmaß-Bauteilen,
- Fig. 8:: eine Fig. 7 entsprechende Ansicht eines verriegelten Beschlages mit maximal zulässig toleranzbehafteten Bauteilen,
- Fig. 9:: eine Fig. 7 entsprechende Ansicht eines verriegelten Beschlages mit unzulässig großen Bauteiltoleranzen,
- Fig. 10:: eine schematische Darstellung eines Fahrzeugsitzes mit einem Beschlag gemäß einem zweiten Ausführungsbeispiel,
- Fig. 11:: eine Fig. 6 entsprechende Ansicht des zweiten Ausführungsbeispiels und
- Fig. 12:: einen Fig. 3 entsprechenden, radialen Schnitt durch das zweite Ausführungsbeispiel in vollständig entriegeltem Zustand.

Ein Fahrzeugsitz 1 für ein Kraftfahrzeug weist ein Sitzteil 3 und eine relativ zum Sitzteil 3 in ihrer Neigung einstellbare Lehne 4 auf. Zur Neigungseinstellung der Lehne 4 wird manuell, beispielsweise mittels eines ersten Handhebels 5, eine Übertragungsstange 7 gedreht, welche horizontal im Übergangsbereich zwischen Sitzteil 3 und Lehne 4 angeordnet ist. Auf beiden Seiten des Fahrzeugsitzes 1 greift die Übertragungsstange 7 in einen Beschlag 10 ein. Die Übertragungsstange 7 definiert die verwendeten Richtungsangaben eines Zylinderkoordinatensystems.

Der Beschlag 10 weist ein erstes Beschlagteil 11 und ein zweites Beschlagteil 12 auf, welche relativ zueinander um eine Achse A verdrehbar sind. Die Achse A fluchtet vorliegend mit der Mittelachse der Übertragungsstange 7. Die beiden Beschlagteile 11 und 12 lassen sich jeweils näherungsweise in eine kreisrunde Scheibenform einbeschreiben. Beide Beschlagteile 11 und 12 bestehen vorzugsweise aus Metall, insbesondere aus Stahl, der wenigstens bereichsweise gehärtet sein kann. Zur Aufnahme der axial wirkenden Kräfte, also zum axialen Zusammenhalt der Beschlagteile 11 und 12, ist ein Umklammerungsring 13 vorgesehen. Der Umklammerungsring 13 besteht vorzugsweise aus Metall, insbesondere Stahl, der vorzugsweise ungehärtet ist. Der Umklammerungsring 13 weist vorzugsweise eine im Wesentlichen flache Ringform auf, kann aber in alternativer Ausführung L-förmig profiliert mit einem Zylinderabschnitt und stirnseitig einem flachen Ringabschnitt sein.

Der Umklammerungsring 13 ist fest mit einem der beiden Beschlagteile 11 und 12 verbunden, vorliegend in einem äußeren Ringabschnitt mit dem zweiten Beschlagteil 12, beispielsweise mittels Laserschweißens oder mittels einer anderen an sich bekannten Befestigungstechnik. Mittels eines inneren Ringabschnittes, welcher in einer zur axialen Richtung senkrechten Ebene angeordnet ist, übergreift der Umklammerungsring 13, gegebenenfalls unter Zwischenlage eines Gleitrings, das erste Beschlagteil 11 in dessen radial äußerem Randbereich, ohne die Relativbewegung der beiden Beschlagteile 11 und 12 zu behindern. Zudem werden die einander zugewandten Innenflächen der beiden Beschlagteile 11 und 12 vor dem Eindringen von Fremdkörpern und der Verschmutzung und Beschädigung geschützt.

Der Umklammerungsring 13 und das mit ihm fest verbundene Beschlagteil 11 oder 12 umklammern also das relativ zu ihnen bewegliche, andere der beiden Beschlagteile 11 und 12. In baulicher Hinsicht bilden die beiden Beschlagteile 11 und 12 daher zusammen (mit dem Umklammerungsring 13) eine scheibenförmige Einheit.

Mit der Montage des Beschlages 10 ist das erste Beschlagteil 11 beispielsweise fest mit der Struktur der Lehne 4 verbunden, also lehnenfest. Das zweite Beschlagteil 12 ist dann fest mit der Struktur des Sitzteils 3 verbunden, also sitzteilfest. Die Zuordnungen der Beschlagteile 11 und 12 können jedoch auch vertauscht sein, d.h. das erste Beschlagteil 11 wäre dann sitzteilfest und das zweite Beschlagteil 12 lehnenfest. Der Beschlag 10 liegt im Kraftfluss zwischen Lehne 4 und Sitzteil 3.

Der Beschlag 10 ist als Rastbeschlag ausgebildet, bei welchem das erste Beschlagteil 11 und das zweite Beschlagteil 12 miteinander verriegelbar sind, wie es beispielsweise in der DE 10 2006 015 560 B3 beschrieben ist.

Das zweite Beschlagteil 12 weist - vorliegend vier - Führungssegmente 14 auf, welche mit geraden Führungsflächen paarweise jeweils einen Riegel 16 seitlich in radialer Richtung führen. Die - vorliegend insgesamt vier - Riegel 16 sind - vorliegend um je 90° - versetzt zueinander in einem zwischen den beiden Beschlagteilen 11 und 12 definierten Bauraum angeordnet. Die Riegel 16 sind an ihrem radial außen liegenden Ende mit einer Verzahnung versehen, die mit einem Zahnkranz 17 des als Hohlrad ausgebildeten ersten Beschlagteils 11 in Eingriff gelangen (einfallen) kann. Wenn der Zahnkranz 17 und die Riegel 16 zusammenwirken, ist der Beschlag 10 verriegelt. In alternativer Ausführung beträgt die Anzahl der Riegel eins, zwei, drei oder mehr als vier Riegel.

Das erste Beschlagteil 11 ist in einer Vertiefung des zweiten Beschlagteils 12 angeordnet und wird durch dieses radial außen übergriffen, wodurch die beiden Beschlagteile 11 und 12 einander lagern. Dabei ist der radial äußere Randbereich des ersten Beschlagteils 11 mit dem Zahnkranz 17 in radialer Richtung zwischen den Führungssegmenten 14 und dem (der Lagerung des ersten Beschlagteils 11 dienenden) radial äußeren Randbereich des zweiten Beschlagteils 12 angeordnet. Bei hohen Belastungen, beispielsweise im Crashfall, kann das erste Beschlagteil 11 - nach einer Verformung - mit seinem Zahnkranz 17 in Anlage an die in Lastrichtung näher gelegenen Führungssegmente 14 kommen, welche in Richtung zum Zahnkranz 17 entsprechend (konzentrisch) gekrümmte Flächen aufweisen. Dies erhöht die Festigkeit des Beschlages 10.

Das erste Beschlagteil 11 kann im zweiten Beschlagteil 12 gelagert sein. Die Verhältnisse könnten aber genau umgekehrt sein, d.h. das zweite Beschlagteil 12 kann auf dem ersten Beschlagteil 11 gelagert sein. Grundsätzlich sind beide Anordnungen gleichwertig.

Im Zentrum des Beschlages 10 ist ein Mitnehmer 21 angeordnet, beispielsweise aus Kunststoff, welcher drehbar an wenigstens einem der beiden Beschlagteile 11 und 12, vorliegend dem ersten Beschlagteil 11, gelagert ist, genauer gesagt in einer zentralen Öffnung desselben. Auf beiden Fahrzeugsitzseiten ist der Mitnehmer 21 drehfest verbunden oder wenigstens auf Mitnahme gekoppelt mit der Übertragungsstange 7, welche in eine Bohrung 23 des hohlen Mitnehmers 21 eingeführt ist und auf welcher der erste Handhebel 5 drehfest sitzt. An einem Ende des Mitnehmers 21, vorliegend demjenigen am zweiten Beschlagteil 12, ist ein Befestigungsring 24 vorgesehen, welcher vorliegend aus Kunststoff besteht und vorzugsweise mittels Ultraschallschweißens am Mitnehmer 21 befestigt ist. Am Befestigungsring 24 kann der erste Handhebel 5 drehfest festgeclipst werden. Der Befestigungsring 24 kann auch am anderen Ende des Mitnehmers 21 oder jeweils an beiden Enden vorgesehen sein.

Auf dem Mitnehmer 21 sitzt drehfest oder wenigstens auf Mitnahme gekoppelt ein Exzenter 27, welcher in dem zwischen den Beschlagteilen 11 und 12 definierten Bauraum angeordnet ist. Der Exzenter 27 weist entlang seines Außenumfangs für jeden Riegel 16, also vorliegend viermal, einen ersten Exzenternocken 28, welcher zum Zusammenwirken mit einem ersten Riegelnocken 16a vorgesehen ist, und - in Umfangsrichtung versetzt dazu - einen zweiten Exzenternocken 29 auf, welcher zum Zusammenwirken mit einem zweiten Riegelnocken 16b vorgesehen ist. Die Exzenternocken 28 und 29 weisen radial nach außen, die Riegelnocken 16a und 16b vom jeweiligen Riegel 16 aus radial nach innen. Die Exzenternocken 28 und 29 und die Riegelnocken 16a und 16b sind konvex ausgebildete Materialpartien, zumindest durchgängig in dem Bereich, in dem jeweils ein Kontaktpunkt K1, K2 zwischen den Exzenternocken 28 und 29 und den jeweils zugeordneten Riegelnocken 16a und 16b zueinander liegen kann.

Eine Feder 35, beispielsweise eine Spiralfeder, wie sie aus der DE 10 2009 041 492 A1 bekannt ist,
ist in einer zentralen Aufnahme eines der beiden Beschlagteile 11 und 12, vorliegend des zweiten Beschlagteils 12, angeordnet und im radial äußeren Bereich der Feder 35 am zweiten Beschlagteil 12 abgestützt. Die Feder 35 beaufschlagt den Exzenter 27, vorliegend indem sie innen drehfest auf dem Mitnehmer 21 sitzt. Der von der Feder 35 beaufschlagte Exzenter 27 wirkt auf die radial beweglichen Riegel 16 ein und beaufschlagt diese, so dass sie radial nach außen gedrückt werden, um in den Zahnkranz 17 einzufallen, womit der Beschlag 10 verriegelt ist.

Eine Steuerscheibe 36 ist im Bauraum axial zwischen den Riegeln 16 und dem ersten Beschlagteil 11 angeordnet und sitzt vorliegend drehfest auf dem Exzenter 27. Die Steuerscheibe 36 weist - vorliegend vier - Steuerbahnen auf, die jeweils mit einer Nase 38 jedes Riegels 16 zusammenwirken. Die Nasen 38 stehen dabei in axialer Richtung von den ihnen zugeordneten Riegeln 16 ab. Bei einer Drehung (um wenige Grad) des Mitnehmers 21 - und des damit angetriebenen Exzenters 27 und der Steuerscheibe 36 - entgegen der Kraft der Feder 35 zieht die Steuerscheibe 36 die Riegel 16 radial nach innen, d.h. aus dem Zahnkranz 17, womit der Beschlag 10 entriegelt ist und die beiden Beschlagteile 11 und 12 relativ zueinander um die Achse A verdrehbar sind. Die Lehne 4 ist nun um die Achse A schwenkbar, um ihre Neigung einzustellen, d.h. um eine andere Gebrauchsstellung einzunehmen.

Die Schließrichtung c des Exzenters 27 ist die aufgrund der Beaufschlagung durch die Feder 35 schließend wirkende Drehrichtung des Exzenters 27. Im Folgenden ist das Zusammenwirken eines der ersten Exzenternocken 28 mit dem zugehörigen ersten Riegelnocken 16a betrachtet, wobei die Schließrichtung c in den Figuren im Uhrzeigersinn ist. Die übrigen ersten Exzenternocken 28 wirken vorliegend in analoger Weise mit den ihnen zugeordneten ersten Riegelnocken 16a zusammen. In einer Abwandlung des Ausführungsbeispiels ist jedoch nur ein erster Exzenternocken 28 entsprechend ausgebildet.

Im verriegelten Zustand und ohne zusätzliche Belastung der Lehne 4 (d.h. ohne äußeres Drehmoment und nur mit dem durch das Gewicht der Lehne 4 bedingten Drehmoment) beaufschlagt der Exzenter 27 die Riegel 16 nur mittels der ersten Exzenternocken 28, die jeweils auf die zugeordneten ersten Riegelnocken 16a wirken, und zwar in einem ersten Kontaktpunkt K1 (an dem der erste Exzenternocken 28 und der erste Riegelnocken 16a in Kontakt miteinander stehen), während zwischen den zweiten Exzenternocken 29 und den jeweils zugeordneten zweiten Riegelnocken 16b ein Spalt von etwa 0,05 bis 0,5 mm, vorzugsweise etwa 0,25 mm, besteht.

Wenn im verriegelten Zustand eine Belastung auf die Lehne 4 wirkt, versucht das daraus resultierende Drehmoment den Zahnkranz 17 relativ zu den Führungssegmenten 14 zu drehen. Die Riegel 16 sind mit Spiel zwischen den Führungssegmenten 14 geführt und stehen einerseits mit dem Zahnkranz 17 in Eingriff und sind andererseits am zugeordneten ersten Exzenternocken 28 abgestützt. Das Drehmoment auf die Lehne 4 kippt daher die aufgrund des Spiels geringfügig beweglichen Riegel 16 zwischen den und relativ zu den Führungssegmenten 14.

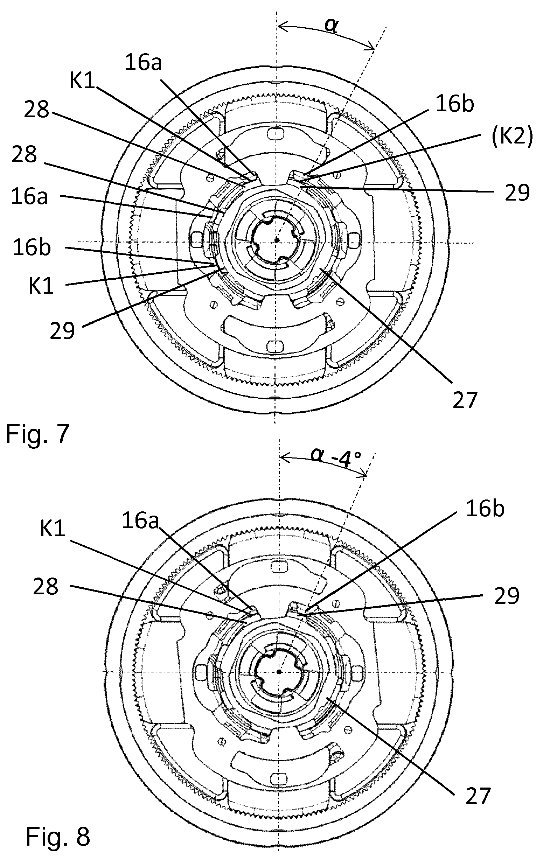

Wenn das Drehmoment (bezogen auf die Figuren 7 bis 9) auf den oberen Riegel 16 gegen den Uhrzeigersinn wirkt, kippt der Riegel 16 nach links (und kontaktiert das linke Führungssegment 14). Die resultierende Kraft im ersten Kontaktpunkt K1 verstärkt sich. Wenn das Drehmoment auf die Lehne 4 (in den Figuren) im Uhrzeigersinn wirkt, kippt der Riegel 16 nach rechts (und kontaktiert das rechte Führungssegment 14). Wenn das Drehmoment auf die Lehne 4 groß genug ist, beispielsweise mehr als 100 Nm, kommen der zweite Exzenternocken 29 und der zweite Riegelnocken 16b in einem zweiten Kontaktpunkt K2 in Kontakt miteinander.

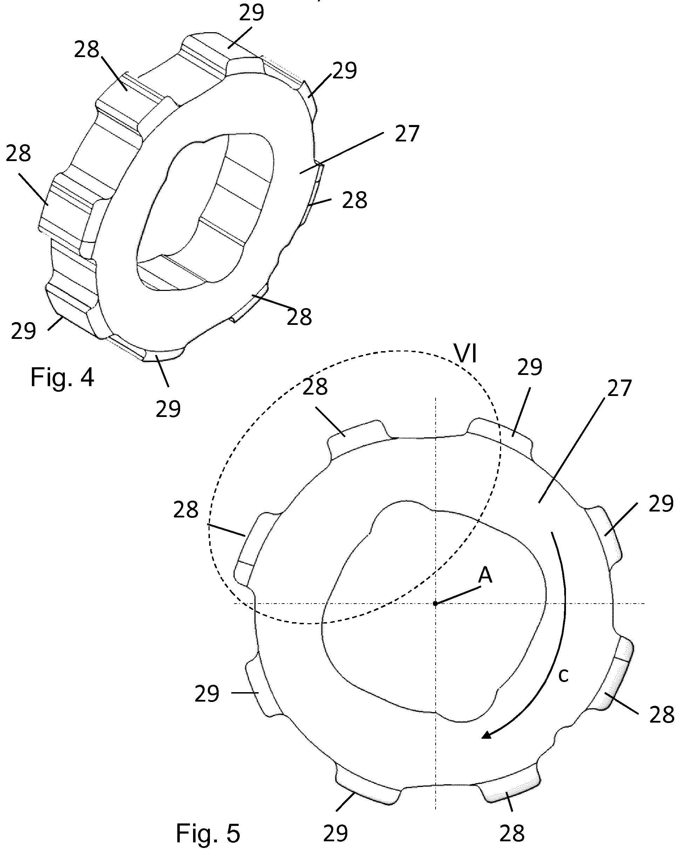

Die Situation ist bezüglich des Kippens des Riegels 16 an dem diagonal gegenüberliegenden Riegel 16 vorzugsweise wie zuvor beschrieben. Bei den benachbart dazwischen angeordneten Riegeln 16 tritt die bezüglich der Schließrichtung c spiegelbildliche Situation auf, d.h. diese Riegel 16 kippen gegensinnig und die zugehörigen ersten Exzenternocken 28 eilen in Schließrichtung c vor. Dabei liegen - wie in Figur 5 zu erkennen - über den Exzenterumfang immer jeweils zwei erste Exzenternocken 28 und zwei zweite Exzenternocken 29 benachbart zueinander. In einer Abwandlung des Ausführungsbeispiels können die benachbarten Riegel aber auch dieselbe Auslegung haben, so dass ein gleichsinniges Riegelkippen erfolgt und über den gesamten Exzenterumfang abwechselnd jeweils ein erster Exzenternocken 28 und ein zweiter Exzenternocken 29 benachbart zueinander liegen.

Der erste Exzenternocken 28 ist entlang seiner äußeren Kontur in mehrere Nockenabschnitte unterschiedlicher Geometrie unterteilt. Abhängig von der Winkelstellung des Exzenters 27 kommen ein oder mehrere dieser Nockenabschnitte des ersten Exzenternockens 28 im ersten Kontaktpunkt K1 mit dem ersten Riegelnocken 16a in Kontakt. Die einzelnen Nockenabschnitte werden in Umfangsrichtung (d.h. in einer Richtung um die Achse A durch nachfolgend beschriebene (Begrenzungs-) Punkte voneinander getrennt. In axialer Richtung (in Richtung der Achse A) erstrecken sich die Nockenabschnitte vorzugsweise über die gesamte Bauteilbreite des Exzenters 27. Die Bauteilbreite des Exzenters 27 ist bei dem flächig gestalteten Exzenter 27 durch dessen Materialstärke definiert.

Entgegen der Schließrichtung c gesehen beginnt ein erster Nockenabschnitt 28.1 des ersten Exzenternockens 28 mit einer Steuerkontur, die durch eine Verrundung einer in radialer Richtung verlaufende ersten Flanke des Exzenternockens 28 mit der in Umfangsrichtung verlaufenden Kontur des Exzenternockens 28 definiert ist und das Einsteuern des Riegels 16 in den Zahnkranz 17 steuert, indem der erste Riegelnocken 16a während des Einfallens des Riegels 16 in den Zahnkranz 17 mit dieser Steuerkontur zusammenwirkt. Der erste Nockenabschnitt 28.1 verläuft entgegen der Schließrichtung c gesehen bis zu einem ersten Punkt P1. In einer Abwandlung des Ausführungsbeispiels kann der erste Nockenabschnitt 28.1 entfallen, indem die in radialer Richtung verlaufende erste Flanke des Exzenternockens 28 mit der in Umfangsrichtung verlaufenden Kontur des Exzenternockens 28 scharfkantig verbunden ist.

Zwischen dem ersten Punkt P1 und einem zum ersten Punkt P1 entgegen der Schließrichtung c gelegenen zweiten Punkt P2 verläuft ein zweiter Nockenabschnitt 28.2, der durch eine an jedem Punkt des zweiten Nockenabschnitts 28.2 exakt in Umfangrichtung verlaufende Nockenkontur gekennzeichnet ist, d.h. der exakt konzentrisch um die Achse A verläuft, also mit einem Keilwinkel von 0° zur Umfangsrichtung (Nullgradkontur).

Eine von dem ersten Riegelnocken 16a auf den zweiten Nockenabschnitt übertragene Normalkraft geht dadurch durch den Mittelpunkt des Beschlages 10, also durch die Achse A, so dass kein öffnendes Moment auf den Exzenter 27 wirkt. Die Länge des zweiten Nockenabschnitts 28.2 entspricht einem Winkelabschnitt des Exzenters von ca. 1,5°. Dies entspricht etwa 5% des gesamten Exzenter-Betätigungswinkels von 30°. Eine Verkleinerung der Länge des zweiten Nockenabschnitts 28.2 bis auf annähernd 0° (Linienberührung) ist theoretisch möglich. Eine Vergrößerung ist beliebig möglich, führt jedoch zu entsprechend vergrößerten Betätigungswinkeln und Betätigungsenergien beim Entriegeln des Beschlages 10.

Zwischen dem zweiten Punkt P2 und einem zum zweiten Punkt P2 entgegen der Schließrichtung c gelegenen dritten Punkt P3 verläuft ein dritter Nockenabschnitt 28.3, der einen stetigen Übergang zu einem vierten Nockenabschnitt 28.4 bildet.

Zwischen dem dritten Punkt P3 und einem entgegen der Schließrichtung c gelegenen vierten Punkt P4 verläuft der vierte Nockenabschnitt 28.4, der durch eine - entgegen der Schließrichtung c gesehen - gegenüber der Umfangrichtung leicht radial nach außen verlaufende Nockenkontur gekennzeichnet ist, die in einem Keilwinkel verläuft, der vorliegend 4° bis 6° beträgt. Die Schließrichtung c gibt vor, wie dieser Keilwinkel gemessen wird. Der Keilwinkel ist positiv, d.h. bildlich gesehen ragen die in Schließrichtung c nacheilenden Bereiche des vierten Nockenabschnitts radial weiter nach außen als die voreilenden Bereiche, so dass der vom ersten Exzenternocken 28 beaufschlagte Riegel 16 gesperrt werden kann und gleichzeitig ein Toleranzausgleich möglich ist, indem ein Spiel zwischen dem ersten Exzenternocken 28 und dem ersten Riegelnocken 16a und/oder zwischen der Verzahnung des Riegels 16 und dem Zahnkranz 17 durch eine Keilwirkung herausgestellt wird.

In einer Abwandlung des Ausführungsbeispiels entfällt der dritte Nockenabschnitt 28.3. Der zweite Nockenabschnitt 28.2 und der vierte Nockenabschnitt 28.4 liegen dann unmittelbar aneinander an. Dies ist insbesondere bei kleinen Keilwinkeln des vierten Nockenabschnitts 28.4 ohne Funktionsnachteile möglich.

Eine von dem ersten Riegelnocken 16a auf den vierten Nockenabschnitt 28.4 übertragene resultierende Kraft wirkt öffnend auf den Exzenter 27, wird jedoch durch die Reibung zwischen dem ersten Exzenternocken 28 und dem ersten Riegelnocken 16a selbsthemmend kompensiert.

Entgegen der Schließrichtung c gesehen hinter dem vierten Punkt P4 geht die Nockenkontur vorzugsweise mit einem Radius in die zweite Flanke des ersten Exzenternockens 28 über.

Nach Montage des Beschlages 10 wird eine Funktionsprüfung durchgeführt, in der die wichtigen Merkmale zur Beurteilung der Funktion und Sicherheit des Beschlages 10 geprüft werden. Ein wichtiges Merkmal ist die Winkelstellung des Mitnehmers 21, die der Winkelstellung des mit dem Mitnehmer 21 verbundenen Exzenters 27 entspricht. Die Winkelstellung des Mitnehmers 27 entspricht dem Betätigungswinkel des Beschlages 10 und gibt Auskunft über den Verriegelungsgrad des Beschlages.

In den Fig. 7 bis 9 ist die Winkelstellung des Exzenters in Abhängigkeit von Bauteiltoleranzen dargestellt. Fig. 7 zeigt einen verriegelten Beschlag mit Nennmaß-Bauteilen. Ein Nennmaß-Exzenterwinkel α wird in Schließrichtung c gemessen und ist vorliegend definiert als Winkel zwischen einerseits einer Linie von der Achse A zur radial verlaufenden Mittellinie des Riegels 16 und andererseits einer Linie von der Achse A durch einen beliebigen, aber fest definierten Messpunkt auf dem in Schließrichtung c nächstgelegen zweiten Exzenternocken 29. Der erste Kontaktpunkt K1 zwischen erstem Riegelnocken 16a und erstem Exzenternocken 28 befindet sich auf dem vierten Nockenabschnitt 28.4 (zwischen dem dritten Punkt P3 und dem vierten Punkt P4).

Fig. 8 zeigt eine Fig. 7 entsprechende Ansicht eines verriegelten Beschlages mit toleranzbehafteten Bauteilen, deren Toleranzen sich in Summe zu einer maximal zulässigen, sich auf den Exzenterwinkel des Exzenters 27 auswirkenden Gesamttoleranz aufaddieren. Eine solche Gesamttoleranz resultiert beispielsweise aus einer Kombination eines Zahnkranzes 17 mit einem zu kleinem Durchmesser, eines Riegels 16 mit Nennmaß und eines Exzenter 27 mit zu großem Außendurchmesser im Bereich der ersten Exzenternocken 28. Der Exzenter 27 kann dann nicht vollständig in Schließrichtung c drehen, so dass der Exzenterwinkel gegenüber dem Nennmaß-Exzenterwinkel α eines Beschlages 10 mit Nennmaß-Bauteilen um ca. 4° geringer ist. Der erste Kontaktpunkt K1 zwischen dem erstem Riegelnocken 16a und dem erstem Exzenternocken 28 befindet sich daher im dritten Nockenabschnitt 28.3 (zwischen dem zweiten Punkt P2 und dem dritten Punkt P3) oder im zweiten Nockenabschnitt 28.2 (zwischen dem ersten Punkt P1 und dem zweiten Punkt P2). Bei Belastungszuständen, die ohne den zweiten Nockenabschnitt 28.2 zu einer Öffnung des Exzenters 27 führen könnten, bliebe der Exzenter 27, ggf. nach einer geringfügigen Drehung entgegen der Schließrichtung c, in einer Stellung stehen, bei der der erste Kontaktpunkt K1 im zweiten Nockenabschnitt 28.2 läge. Eine weitere Drehung des Exzenters 27 erfolgt nicht, weil aufgrund der konzentrisch um die Achse A verlaufenden Kontur des zweiten Nockenabschnitts 28.2 (Nullgradkontur) eine im zweiten Nockenabschnitt 28.2 vom ersten Riegelnocken 16a auf den ersten Exzenternocken 28 übertragene Kraft keine öffnende Kraftrichtung aufweist.

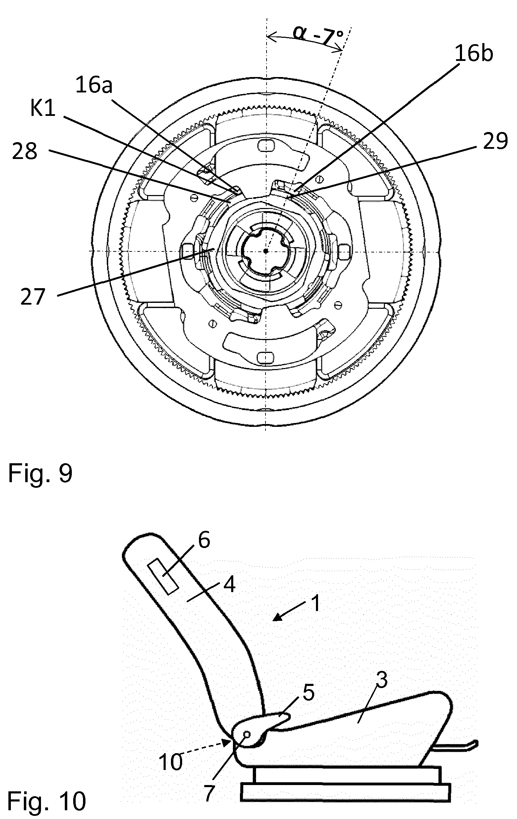

Fig. 9 zeigt eine Fig. 7 entsprechende Ansicht eines verriegelten Beschlages 10 mit geringfügig zu großen und somit unzulässigen Bauteiltoleranzen. Der erste Kontaktpunkt K1 (zwischen erstem Riegelnocken 16a und erstem Exzenternocken 28) befindet sich in Schließrichtung c gesehen vor dem zweiten Nockenabschnitt 28.2 Der Exzenterwinkel ist gegenüber dem Nennmaß-Exzenterwinkel α der Nennmaß-Bauteile um ca. 7° geringer. Dieser Winkelunterschied kann im Montageprozess messtechnisch zuverlässig festgestellt werden, so dass ein Beschlag 10 mit zu großen Bauteiltoleranzen aussortiert werden kann. Dadurch, dass der zweite Nockenabschnitt 28.2 einen Keilwinkel von 0° zur Umfangsrichtung aufweist, ist die Winkelabweichung des Exzenterwinkels von dem (Nenn-) Exzenterwinkel α größer als bei einem Beschlag mit einem Exzenter ohne Nullgradkontur, bei dem der Keilwinkel auch bei Überschreitung der Toleranzgrenze konstant bleibt und ein Überschreiten der Toleranzgrenze nur eine sehr geringe Winkelabweichung von dem Nennmaß-Exzenterwinkel α zur Folge hat. Toleranzüberschreitungen sind somit mit Hilfe der Nullgradkontur des zweiten Nockenabschnitts 28.2 zwischen dem ersten Punkt P1 und dem zweiten Punkt P2 einfach zu erkennen.

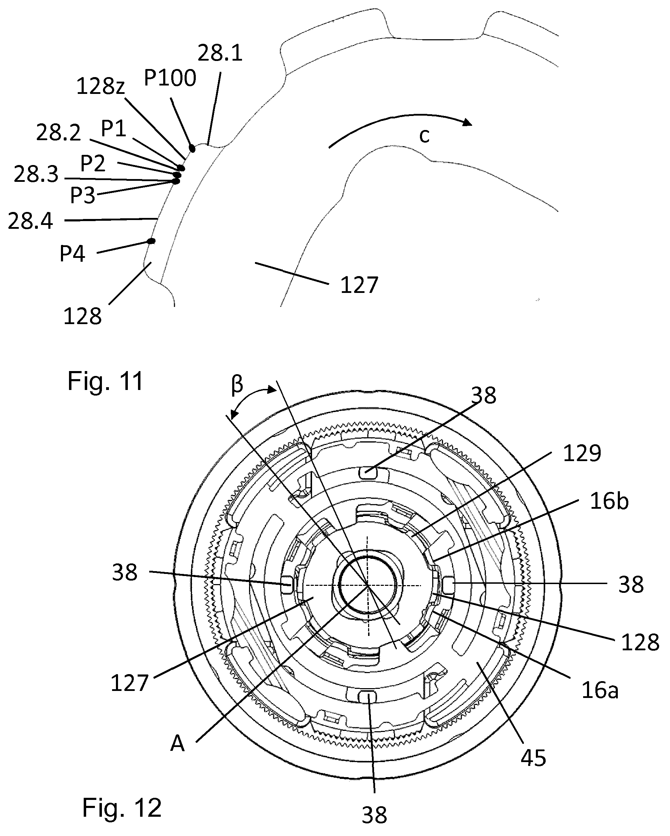

In einem in den Fig. 10 bis 12 dargestellten zweiten Ausführungsbeispiel ist der Beschlag 10 ein Freischwenkbeschlag eines Beschlagsystems, das zusätzlich noch einen Gegenbeschlag umfasst. Ein solches Beschlagsystem ist beispielsweise in der DE 20 2010 015 093 U1 offenbart. Das zweite Ausführungsbeispiel entspricht weitgehend dem ersten Ausführungsbeispiel, weshalb nachfolgend nur auf die Unterschiede eingegangen wird. Die gegenüber dem ersten Ausführungsbeispiel geänderten Bauteile tragen um 100 höhere Bezugszeichen.

Der (Freischwenk-) Beschlag 10, der über einen zweiten Handhebel 6 betätigt wird, dient gemeinsam mit dem Gegenbeschlag einer Verriegelung der Freischwenkung der Lehne 4. Bei zweitürigen Kraftfahrzeugen soll mittels des Freischwenkens der Lehne 4 der Zugang zu einer hinteren Sitzreihe erleichtert werden, wofür die entriegelte Lehne 4 aus einer der Gebrauchsstellungen nach vorne in eine nicht zum Sitzgebrauch geeignete, freigeschwenkte Stellung geschwenkt wird. Es erhöht den Bedienkomfort, wenn der zweite Handhebel 6 nicht während des gesamten Freischwenkens gehalten werden muss und die Beschläge trotzdem erst in der freigeschwenkten Stellung verriegeln. Im (Freischwenk-) Beschlag 10 ist hierfür zwischen der Steuerscheibe 36 und dem ersten Beschlagteil 11 um die Achse A herum ein ringförmiges Freischwenk-Steuerelement 45 vorgesehen, welches drehfest mit dem ersten Beschlagteil 11 verbunden ist. Das Freischwenk-Steuerelement 45 weist Anschlagbahnen auf, die mit Nasen 38 der Riegel 16 zusammenwirken, indem sie je nach Winkellage des Freischwenk-Steuerelements 45 die Bewegung der Riegel 16 radial nach außen begrenzen oder diese ungehindert in den Zahnkranz 17 einfallen lassen.

Der Exzenter 127 des Beschlages 10 ist im entriegelten Zustand soweit entgegen der Schließrichtung c verdreht, dass die ersten und/oder zweiten Riegelnocken 16a, 16b der radial nach innen gezogenen Riegel 16 in den Zwischenräumen zwischen den in radialer Richtung verlaufenden Seitenkonturen der ersten und zweiten Exzenternocken 128, 129 liegen. Die Anschlagbahnen des Freischwenk-Steuerelements 45 halten die Riegel 16 nach innen gezogen, solange die Lehne 4 nicht zurückgeschwenkt wird. Der Exzenter 127 wird durch ein Anliegen in Umfangsrichtung mindestens eines der ersten und/oder zweiten Exzenternocken 128, 129 an mindestens einem der ersten und/oder zweiten Riegelnocken 16a, 16b am Drehen gehindert.

Der (Freischwenk-) Beschlag 10 weist Mittel auf, mittels derer der Beschlag 10 und der Gegenbeschlag miteinander in Wirkverbindung gebracht werden können, insbesondere mittels eines Bowdenzugs. Der entriegelte (Freischwenk-) Beschlag 10 hält den ebenfalls entriegelten Gegenbeschlag entriegelt. Gegenüber dem ersten Exzenternocken 28 des ersten Ausführungsbeispiels weist der erste Exzenternocken 128 zwischen dem ersten Nockenabschnitt 28.1 und dem zweiten Nockenabschnitt 28.2 einen zwischen einem Zusatzpunkt P100 und dem ersten Punkt P1 angeordneten Zusatznockenabschnitt 128z auf, der vorzugsweise eine - entgegen der Schließrichtung c gesehen - gegenüber der Umfangrichtung leicht radial nach außen verlaufende Nockenkontur aufweist. Aufgrund des Zusatznockenabschnitts 128z ist die Breite des ersten Exzenternockens 128 im Umfangsrichtung größer als die Breite des ersten Exzenternockens 28 des ersten Ausführungsbeispiels (und größer als die Breite des ersten Exzenternockens des Gegenbeschlages).

Toleranzen im Beschlagsystem, beispielsweise eine Lose im Bowdenzug zwischen dem (Freischwenk-) Beschlag 10 und dem Gegenbeschlag werden durch den Zusatznockenabschnitt 128z des ersten Exzenternockens 128 kompensiert, indem der geöffnete Exzenter 127 aufgrund des breiteren ersten Exzenternockens 128 einen größeren Rückhaltewinkel β aufweist. Der Rückhaltewinkel β beschreibt den Winkel des Exzenters 127 um die Achse A zwischen der verriegelten Position und der durch die Anlage der ersten und/oder zweiten Riegelnocken 16a, 16b an den ersten und/oder zweiten Exzenternocken 128, 129 offen gehaltenen Position des Exzenters 127.

Im zweiten Ausführungsbeispiel weisen auch die zweiten Exzenternocken 129 einen solchen zusätzlichen Nockenabschnitt auf.

### Bezugszeichenliste

- 1: Fahrzeugsitz
- 3: Sitzteil
- 4: Lehne
- 5: erster Handhebel
- 6: zweiter Handhebel
- 7: Übertragungsstange
- 10: Beschlag
- 11: erstes Beschlagteil
- 12: zweites Beschlagteil
- 13: Umklammerungsring
- 14: Führungssegment
- 16: Riegel
- 16a: erster Riegelnocken
- 16b: zweiter Riegelnocken
- 17: Zahnkranz
- 21: Mitnehmer
- 23: Bohrung
- 24: Befestigungsring
- 27, 127: Exzenter
- 28, 128: erster Exzenternocken
- 28.1: erster Nockenabschnitt
- 28.2: zweiter Nockenabschnitt
- 28.3: dritter Nockenabschnitt
- 28.4: vierter Nockenabschnitt
- 29, 129: zweiter Exzenternocken
- 35: Feder
- 36: Steuerscheibe
- 38: Nase
- 45: Freischwenk-Steuerelement
- 128z: Zusatznockenabschnitt
- A: Achse
- c: Schließrichtung
- K1: erster Kontaktpunkt
- K2: zweiter Kontaktpunkt
- P1: erster Punkt
- P2: zweiter Punkt
- P3: dritter Punkt
- P4: vierter Punkt
- P100: Zusatzpunkt
- α: Exzenterwinkel
- β: Rückhaltewinkel

## Patentansprüche

1. Beschlag (10) für einen Fahrzeugsitz (1), insbesondere für einen Kraftfahrzeugsitz, mit
a) einem ersten Beschlagteil (11) und einem zweiten Beschlagteil (12), welche relativ zueinander um eine Achse (A) verdrehbar sind, wobei am ersten Beschlagteil (11) ein Zahnkranz (17) und am zweiten Beschlagteil (12) Führungssegmente (14) ausgebildet sind,
b) wenigstens einem Riegel (16), welcher mittels der Führungssegmente (14) geführt zwischen einem verriegelten Zustand und einem entriegelten Zustand radial verschieblich ist, und welcher im verriegelten Zustand mit dem Zahnkranz (17) zusammenwirkt, um den Beschlag (10) zu verriegeln, wobei der wenigstens eine Riegel (16) einen ersten Riegelnocken (16a) und einen zweiten Riegelnocken (16b) aufweist, und
c) einem um die Achse (A) drehbar gelagerten Exzenter (27), welcher beim Übergang vom entriegelten Zustand in den verriegelten Zustand durch Drehung in eine Schließrichtung (c) den Riegel (16) mit einer Kraft zum Spannen des Riegels (16) gegen den Zahnkranz (17) beaufschlagt, wobei der Exzenter (27) für die Beaufschlagung des Riegels (16) einen ersten Exzenternocken (28, 128), welcher zum Zusammenwirken mit dem ersten Riegelnocken (16a) geeignet ist, und einen zweiten Exzenternocken (29, 129), welcher zum Zusammenwirken mit dem zweiten Riegelnocken (16b) geeignet ist, aufweist,
**dadurch gekennzeichnet, dass**
d) der erste Exzenternocken (28, 128) einen Nockenabschnitt (28.2) aufweist, der in Umfangsrichtung konzentrisch um die Achse (A) verläuft und
e) der konzentrisch um die Achse (A) verlaufende Nockenabschnitt (28.2) entgegen der Schließrichtung (c) vor einem weiteren Nockenabschnitt (28.4) des ersten Exzenternockens (28, 128) angeordnet ist, und der weitere Nockenabschnitt (28.4) entgegen der Schließrichtung (c) eine gegenüber der konzentrischen Umfangskontur radial nach außen verlaufende Nockenkontur zum Spannen des Riegels (16) gegen den Zahnkranz (17) aufweist.

2. Beschlag (10) nach Anspruch 1, **dadurch gekennzeichnet, dass** der erste Exzenternocken (28, 128) einen ersten Nockenabschnitt (28.1) aufweist, der durch eine Verrundung einer im Wesentlichen in radialer Richtung verlaufenden ersten Flanke des ersten Exzenternockens (28) mit einer im Wesentlichen in Umfangsrichtung verlaufenden Kontur des ersten Exzenternockens (28) eine Steuerkontur definiert und die Steuerkontur während des Verriegelns des Beschlages (10) das Einsteuern des Riegels (16) in den Zahnkranz (17) steuert.

3. Beschlag (10) nach Anspruch 2, **dadurch gekennzeichnet, dass** entgegen der Schließrichtung (c) ein zweiter Nockenabschnitt (28.2) an den ersten Nockenabschnitt (28.1) anschließt und der zweite Nockenabschnitt (28.2) den in Umfangsrichtung konzentrisch um die Achse A verlaufenden Nockenabschnitt bildet.

4. Beschlag (10) nach Anspruch 2, **dadurch gekennzeichnet, dass** entgegen der Schließrichtung (c) ein Zusatznockenabschnitt (128z) an den ersten Nockenabschnitt (28.1) anschließt und der Zusatznockenabschnitt (128z) entgegen der Schließrichtung (c) vorzugsweise eine gegenüber einer konzentrischen Umfangskontur radial nach außen verlaufende Nockenkontur aufweist.

5. Beschlag (10) nach Anspruch 4, **dadurch gekennzeichnet, dass** entgegen der Schließrichtung (c) ein zweiter Nockenabschnitt (28.2) an den Zusatznockenabschnitt (128z) anschließt und der zweite Nockenabschnitt (28.2) den in Umfangsrichtung konzentrisch um die Achse A verlaufenden Nockenabschnitt bildet.

6. Beschlag (10) nach Anspruch 3 oder 5, **dadurch gekennzeichnet, dass** entgegen der Schließrichtung (c) ein vierter Nockenabschnitt (28.4) hinter dem zweiten Nockenabschnitt (28.2) angeordnet ist und der vierte Nockenabschnitt (28.4) entgegen der Schließrichtung (c) die gegenüber der konzentrischen Umfangskontur radial nach außen verlaufende Nockenkontur zum Spannen des Riegels (16) in den Zahnkranz (17) aufweist.

7. Beschlag (10) nach Anspruch 6, **dadurch gekennzeichnet, dass** zwischen dem zweiten Nockenabschnitt (28.2) und dem vierten Nockenabschnitt (28.4) ein dritter Nockenabschnitt (28.3) vorgesehen ist, der den zweiten Nockenabschnitt (28.2) und den vierten Nockenabschnitt (28.4) stetig miteinander verbindet.

8. Beschlag (10) nach einem der Ansprüche 1 bis 7, **dadurch gekennzeichnet, dass** im verriegelten, unbelasteten Zustand des Beschlages (10) der erste Exzenternocken (28, 128) in einem ersten Kontaktpunkt (K1) mit dem ersten Riegelnocken (16a) in Kontakt steht, und zwischen dem zweiten Exzenternocken (29, 129) und dem zweiten Riegelnocken (16b) ein Spalt besteht, und dass im verriegelten, belasteten Zustand des Beschlages (10) der Riegel (16) zwischen den Führungssegmenten (14) verkippt und dadurch der erste Exzenternocken (28, 128) in dem ersten Kontaktpunkt (K1) mit dem ersten Riegelnocken (16a) in Kontakt steht und der zweite Exzenternocken (29, 129) in einem zweiten Kontaktpunkt (K2) mit dem zweiten Riegelnocken (16b) in Kontakt steht.

9. Beschlag (10) nach Anspruch 8, **dadurch gekennzeichnet, dass** der Spalt zwischen dem zweiten Exzenternocken (29, 129) und dem zweiten Riegelnocken (16b) 0,05 mm bis 0,5 mm beträgt.

10. Beschlag (10) nach Anspruch 8 oder 9, **dadurch gekennzeichnet, dass** vier Riegel (16) vorgesehen sind, von denen jeder Riegel (16) bei verriegeltem Beschlag (10) im Normalfall gegensinnig zu den jeweils benachbarten Riegeln (16) kippt.

11. Beschlag (10) nach einem der Ansprüche 1 bis 10, **dadurch gekennzeichnet, dass** die radial nach außen verlaufende Nockenkontur einen Keilwinkel von 4° bis 6° aufweist.

12. Beschlag (10) nach einem der Ansprüche 1 bis 11, **dadurch gekennzeichnet, dass** der Beschlag (10) mindestens zwei Riegel (16) und genau einen Exzenter (27) mit mindestens zwei ersten Exzenternocken (28, 128) aufweist.

13. Beschlag (10) nach Anspruch 12, **dadurch gekennzeichnet, dass** nur genau ein erster Exzenternocken (28, 128) der mindestens zwei ersten Exzenternocken (28, 128) einen konzentrisch um die Achse A verlaufende Nockenabschnitt (28.2) aufweist.

14. Fahrzeugsitz (1), insbesondere Kraftfahrzeugsitz, mit wenigstens einem Beschlag (10) nach einem der Ansprüche 1 bis 13.

15. Fahrzeugsitz (1) nach Anspruch 14, **dadurch gekennzeichnet, dass** der Fahrzeugsitz (1) ein Sitzteil (3), welches mit dem einen der beiden Beschlagteile (11, 12) verbunden ist, und eine Lehne (4), welche mit dem anderen den beiden Beschlagteile (11, 12) verbunden ist, aufweist.

## Claims

1. Fitting (10) for a vehicle seat (1), in particular for a motor vehicle seat, comprising
a) a first fitting part (11) and a second fitting part (12) which are able to be rotated relative to one another about an axis (A), wherein a toothed ring (17) is formed on the first fitting part (11) and guide segments (14) are formed on the second fitting part (12),
b) at least one locking bar (16) which is radially displaceably guided by means of the guide segments (14) between a locked state and an unlocked state, and which in the locked state cooperates with the toothed ring (17) in order to lock the fitting (10), wherein the at least one locking bar (16) has a first locking cam (16a) and a second locking cam (16b), and
c) an eccentric (27) mounted rotably about the axis (A), which during the transition from the unlocked state into the locked state by being rotated in a closing direction (c) subjects the locking bar (16) to a force for clamping the locking bar (16) against the toothed ring (17), wherein for acting on the locking bar (16) the eccentric (27) has a first eccentric cam (28, 128) which is suitable for cooperating with the first locking cam (16a) and a second eccentric cam (29, 129) which is suitable for cooperating with the second locking cam (16b),
**characterized in that**
d) the first eccentric cam (28, 128) has a cam portion (28.2) which extends in the peripheral direction concentrically about the axis (A) and
e) the cam portion (28.2) extending concentrically about the axis (A) is arranged counter to the closing direction (c) in front of a further cam portion (28.4) of the first eccentric cam (28, 128), and the further cam portion (28.4) counter to the closing direction (c) has a cam contour which extends radially outwardly relative to the concentric peripheral contour, for clamping the locking bar (16) against the toothed ring (17).

2. Fitting (10) according to Claim 1, **characterized in that** the first eccentric cam (28, 128) has a first cam portion (28.1) which defines a control contour by means of a rounded portion of a first flank of the first eccentric cam (28) extending substantially in the radial direction, with a contour of the first eccentric cam (28) extending substantially in the peripheral direction, and during the locking of the fitting (10) the control contour controls the introduction of the locking bar (16) into the toothed ring (17).

3. Fitting (10) according to Claim 2, **characterized in that** counter to the closing direction (c) a second cam portion (28.2) is adjacent to the first cam portion (28.1) and the second cam portion (28.2) forms the cam portion extending in the peripheral direction concentrically about the axis A.

4. Fitting (10) according to Claim 2, **characterized in that** counter to the closing direction (c) an additional cam portion (128z) is adjacent to the first cam portion (28.1) and counter to the closing direction (c) the additional cam portion (128z) preferably has a cam contour extending radially outwardly relative to a concentric peripheral contour.

5. Fitting (10) according to Claim 4, **characterized in that** counter to the closing direction (c) a second cam portion (28.2) is adjacent to the additional cam portion (128z) and the second cam portion (28.2) forms the cam portion extending in the peripheral direction concentrically about the axis A.

6. Fitting (10) according to Claim 3 or 5, **characterized in that** counter to the closing direction (c) a fourth cam portion (28.4) is arranged behind the second cam portion (28.2) and counter to the closing direction (c) the fourth cam portion (28.4) has the cam contour extending radially outwardly relative to the concentric peripheral contour, for clamping the locking bar (16) in the toothed ring (17).

7. Fitting (10) according to Claim 6, **characterized in that** a third cam portion (28.3) is provided between the second cam portion (28.2) and the fourth cam portion (28.4), said third cam portion connecting together continuously the second cam portion (28.2) and the fourth cam portion (28.4).

8. Fitting (10) according to one of Claims 1 to 7, **characterized in that** in the locked unloaded state of the fitting (10) the first eccentric cam (28, 128) in a first contact point (K1) is in contact with the first locking cam (16a), and a gap exists between the second eccentric cam (29, 129) and the second locking cam (16b), and that in the locked loaded state of the fitting (10) the locking bar (16) is tilted between the guide segments (14) and, as a result, the first eccentric cam (28, 128) is in contact with the first locking cam (16a) in the first contact point (K1) and the second eccentric cam (29, 129) is in contact with the second locking cam (16b) in a second contact point (K2).

9. Fitting (10) according to Claim 8, **characterized in that** the gap between the second eccentric cam (29, 129) and the second locking cam (16b) is 0.05 mm to 0.5 mm.

10. Fitting (10) according to Claim 8 or 9, **characterized in that** four locking bars (16) are provided, each locking bar (16) thereof in the normal case tilting in the direction opposing the respectively adjacent locking bars (16) when the fitting is locked (10).

11. Fitting (10) according to one of Claims 1 to 10, **characterized in that** the cam contour extending radially outwardly has a wedge angle of 4° to 6°.

12. Fitting (10) according to one of Claims 1 to 11, **characterized in that** the fitting (10) has at least two locking bars (16) and just one eccentric (27) with at least two first eccentric cams (28, 128).

13. Fitting (10) according to Claim 12, **characterized in that** just one first eccentric cam (28, 128) of the at least two first eccentric cams (28, 128) has a cam portion (28.2) extending concentrically about the axis A.

14. Vehicle seat (1), in particular motor vehicle seat, comprising at least one fitting (10) according to one of Claims 1 to 13.

15. Vehicle seat (1) according to Claim 14, **characterized in that** the vehicle seat (1) has a seat part (3) which is connected to one of the two fitting parts (11, 12) and a backrest (4) which is connected to the other of the two fitting parts (11, 12).

## Revendications

1. Ferrure (10) pour un siège de véhicule (1), en particulier pour un siège de véhicule automobile, comprenant
a) une première partie de ferrure (11) et une deuxième partie de ferrure (12), lesquelles peuvent tourner l'une par rapport à l'autre autour d'un axe (A), une couronne dentée (17) étant réalisée sur la première partie de ferrure (11) et des segments de guidage (14) étant réalisés sur la deuxième partie de ferrure (12),
b) au moins un verrou (16) qui peut être déplacé radialement de manière guidée par les segments de guidage (14) entre un état verrouillé et un état déverrouillé, et qui, dans l'état verrouillé, coopère avec la couronne dentée (17) afin de verrouiller la ferrure (10), l'au moins un verrou (16) présentant une première came de verrou (16a) et une deuxième came de verrou (16b), et
c) un excentrique (27) supporté à rotation autour de l'axe (A), lequel, lors de la transition de l'état déverrouillé à l'état verrouillé, par rotation dans une direction de fermeture (c), sollicite le verrou (16) avec une force pour serrer le verrou (16) contre la couronne dentée (17), l'excentrique (27), pour la sollicitation du verrou (16), présentant une première came d'excentrique (28, 128), qui est appropriée pour coopérer avec la première came de verrou (16a) et une deuxième came d'excentrique (29, 129) qui est appropriée pour coopérer avec la deuxième came de verrou (16b),
**caractérisée en ce que**
d) la première came d'excentrique (28, 128) présente une portion de came (28.2), laquelle s'étend dans la direction périphérique concentriquement autour de l'axe (A) et
e) la portion de came (28.2) s'étendant concentriquement autour de l'axe (A) est disposée dans le sens opposé à la direction de fermeture (c) avant une portion de came supplémentaire (28.4) de la première came d'excentrique (28, 128), et la portion de came supplémentaire (28.4) présente, dans le sens opposé à la direction de fermeture (c), un contour de came s'étendant radialement vers l'extérieur par rapport au contour périphérique concentrique pour serrer le verrou (16) contre la couronne dentée (17).

2. Ferrure (10) selon la revendication 1, **caractérisée en ce que** la première came d'excentrique (28, 128) présente une première portion de came (28.1) qui définit un contour de commande par un arrondissement d'un premier flanc de la première came d'excentrique (28) s'étendant essentiellement dans la direction radiale avec un contour de la première came d'excentrique (28) s'étendant essentiellement dans la direction périphérique, et le contour de commande, pendant le verrouillage de la ferrure (10), commande la commande du verrou (16) dans la couronne dentée (17).

3. Ferrure (10) selon la revendication 2, **caractérisée en ce qu'**une deuxième portion de came (28.2) se raccorde à la première portion de came (28.1) dans le sens opposé à la direction de fermeture (c) et la deuxième portion de came (28.2) forme la portion de came s'étendant dans la direction périphérique concentriquement autour de l'axe A.

4. Ferrure (10) selon la revendication 2, **caractérisée en ce qu'**une portion de came supplémentaire (128z) se raccorde à la première portion de came (28.1) dans le sens opposé à la direction de fermeture (c) et la portion de came supplémentaire (128z) présente, dans le sens opposé à la direction de fermeture (c), de préférence un contour de came s'étendant radialement vers l'extérieur par rapport à un contour périphérique concentrique.

5. Ferrure (10) selon la revendication 4, **caractérisée en ce qu'**une deuxième portion de came (28.2) se raccorde à la portion de came supplémentaire (128z) dans le sens opposé à la direction de fermeture (c) et la deuxième portion de came (28.2) forme la portion de came s'étendant dans la direction périphérique concentriquement autour de l'axe A.

6. Ferrure (10) selon la revendication 3 ou 5, **caractérisée en ce qu'**une quatrième portion de came (28.4) est disposée derrière la deuxième portion de came (28.2) dans le sens opposé à la direction de fermeture (c) et la quatrième portion de came (28.4) présente, dans le sens opposé à la direction de fermeture (c), le contour de came s'étendant radialement vers l'extérieur par rapport au contour périphérique concentrique, pour serrer le verrou (16) dans la couronne dentée (17).

7. Ferrure (10) selon la revendication 6, **caractérisée en ce qu'**entre la deuxième portion de came (28.2) et la quatrième portion de came (28.4) est prévue une troisième portion de came (28.3) qui relie en continu l'une à l'autre la deuxième portion de came (28.2) et la quatrième portion de came (28.4).

8. Ferrure (10) selon l'une quelconque des revendications 1 à 7, **caractérisée en ce que** dans l'état verrouillé et non sollicité de la ferrure (10), la première came d'excentrique (28, 128) est en contact au niveau d'un premier point de contact (K1) avec la première came de verrou (16a) et entre la deuxième came d'excentrique (29, 129) et la deuxième came de verrou (16b) existe un interstice et **en ce que** dans l'état verrouillé et sollicité de la ferrure (10), le verrou (16) bascule entre les segments de guidage (14) et de ce fait la première came d'excentrique (28, 128) est en contact au niveau du premier point de contact (K1) avec le la première came de verrou (16a) et la deuxième came d'excentrique (29, 129) est en contact au niveau d'un deuxième point de contact (K2) avec la deuxième came de verrou (16b).

9. Ferrure (10) selon la revendication 8, **caractérisée en ce que** l'interstice entre la deuxième came d'excentrique (29, 129) et la deuxième came de verrou (16b) mesure 0,05 mm à 0,5 mm.

10. Ferrure (10) selon la revendication 8 ou 9, **caractérisée en ce que** quatre verrous (16) sont prévus, chaque verrou (16), lorsque la ferrure (10) est verrouillée, basculant dans un cas normal dans le sens opposé aux verrous adjacents respectifs (16).

11. Ferrure (10) selon l'une quelconque des revendications 1 à 10, **caractérisée en ce que** le contour de came s'étendant radialement vers l'extérieur présente un angle au sommet de 4° à 6°.

12. Ferrure (10) selon l'une quelconque des revendications 1 à 11, **caractérisée en ce que** la ferrure (10) présente au moins deux verrous (16) et exactement un excentrique (27) avec au moins deux premières cames d'excentrique (28, 128).

13. Ferrure (10) selon la revendication 12, **caractérisée en ce que** seulement exactement une première came d'excentrique (28, 128) des au moins deux premières cames d'excentrique (28, 128) présente une portion de came (28.2) s'étendant concentriquement autour de l'axe A.

14. Siège de véhicule (1), en particulier siège de véhicule automobile, comprenant au moins une ferrure (10) selon l'une quelconque des revendications 1 à 13.

15. Siège de véhicule (1) selon la revendication 14, **caractérisé en ce que** le siège de véhicule (1) présente une partie de siège (3) qui est connectée à l'une des deux parties de ferrure (11, 12) et un dossier (4) qui est connecté à l'autre des deux parties de ferrure (11, 12).
